# EUROPÄISCHE PATENTSCHRIFT

(11) **EP 1 212 184 B1**
(45) Veröffentlichungstag und Bekanntmachung des Hinweises auf die Patenterteilung: **28.07.2004**
(21) Anmeldenummer: 00960214.5
(22) Anmeldetag: 14.09.2000
(51) Int. Cl.: B29C 45/73

(54) **VERFAHREN UND VORRICHTUNG ZUM TEMPERIEREN VON FORMWERKZEUGEN VON SPRITZGUSSMASCHINEN**
METHOD AND DEVICE FOR TEMPERING FORM TOOLS OF INJECTION MOULDING MACHINES
PROCEDE ET DISPOSITIF POUR L'EQUILIBRAGE DE TEMPERATURE D'OUTILS DE FORMAGE DE PRESSES D'INJECTION

(30) Priorität: 14.09.1999 AT 62799 U
(43) Veröffentlichungstag der Anmeldung: 12.06.2002
(73) Patentinhaber: WITTMANN KUNSTSTOFFGERÄTE Ges.m.b.H., A-1220 Wien (AT)
(72) Erfinder: WITTMANN, Werner, A-1190 Wien (AT)
(74) Vertreter: Hehenberger, Reinhard, Dipl.-Ing., Patentanwalt
(86) Internationale Anmeldenummer: PCT/AT2000/000246
(87) Internationale Veröffentlichungsnummer: WO 2001/019590

(56) Entgegenhaltungen:
- WO-A-94/13454
- AU-A- 3 226 068
- PATENT ABSTRACTS OF JAPAN vol. 8, no. 249 (M-338), 15. November 1984 (1984-11-15) & JP 59 124824 A (TOSHIBA CHEMICAL KK), 19. Juli 1984 (1984-07-19)

## Beschreibung

Die Erfindung betrifft ein Verfahren zum Temperieren von Formwerkzeugen von Spritzgußmaschinen, bei dem Temperiermedium von einer Zulaufleitung kommend durch Leitungen im Formwerkzeug strömt und durch eine Ablaufleitung abgeführt wird, und bei dem der Durchfluß des Temperiermediums mittels Ventilen gesteuert wird.

Die Erfindung betrifft des weiteren eine Vorrichtung zum Steuern des Temperierens von Formwerkzeugen einer Spritzgußmaschine mit einer Zulaufleitung, Leitungen im Formwerkzeug und einer Ablaufleitung, sowie Ventilen zum Steuern des Durchflusses von Temperiermedium durch das Formwerkzeug.

Das Temperieren von Formwerkzeugen gestaltet sich im allgemeinen und insbesondere bei der Herstellung von CD-Rohlingen recht aufwendig, da zum einen während der Produktion große Wärmemengen abzuführen sind, was einen hohen Bedarf an Kühlmedium bedingt. Des weiteren muß in vielen Fällen, insbesondere bei der Herstellung von CD-Rohlingen, der Durchfluß des Kühlmediums in bestimmten Phasen des Herstellungszyklus unterbrochen werden, was an den technischen Aufbau des Temperierkreislaufes bzw. dessen Steuerung hohe Anforderungen stellt, da der Druck im Temperierkreislauf nicht abfallen darf, um eine zuverlässige bzw. gleichmäßige Kühlung der Form bzw. des Herstellungsmaterials zu gewährleisten.

Aus dem Stand der Technik, beispielhaft wird auf die DE-U 88 04 394 verwiesen, ist es bekannt, sowohl in der Vorlaufleitung als auch in der Rücklaufleitung Ventile vorzusehen, um die Strömung des Temperiermediums durch das Formwerkzeug zu takten.

Als Nachteil bei den Vorrichtungen des Standes der Technik hat sich hauptsächlich erwiesen, daß sich durch das Vorsehen von Steuerventilen vor und nach den Formwerkzeugen keine konstanten Druckverhältnisse im Formwerkzeug einstellen, sondern der Druck der Temperiermediums durch das Öffnen und Schließen der Ventile erheblichen Schwankungen unterliegt.

Der Erfindung liegt daher die Aufgabe zu Grunde ein Verfahren und eine Vorrichtung zur Verfügung zu stellen, mit welchen ein gleichmäßigerer Druckverlauf des Temperiermediums während des Herstellungszyklus erzielt werden kann.

Gelöst wird diese Aufgabe mit einem Verfahren mit den Merkmalen des Anspruches 1.

Gelöst wird diese Aufgabe des weiteren mit einer Vorrichtung mit den Merkmalen des Anspruches 8.

Es hat sich herausgestellt, daß wenn - in Strömungsrichtung gesehen - nur nach dem Formwerkzeug Ventile zum Takten, d.h. zum Unterbrechen bzw. Wiederaufnehmen des Strömens von Temperiermedium durch das Formwerkzeug, vorgesehen sind, ein wesentlich gleichmäßigerer Druckverlauf des Temperiermediums während des Herstellungszyklus erzielt werden kann, da die Leitungen im Formwerkzeug nicht vollkommen abgeschlossen werden, sondern auf einer Seite, und zwar der Zulaufleitung, offen bleiben, was natürlich voraussetzt, daß der Druck in der Zulaufleitung nach dem Schließen der Ventile konstant bleibt.

Des weiteren ist es bekannt, entweder kombinierte Kühl- und Heizgeräte zu verwenden, um das Temperiermedium bei Bedarf zu Heizen oder zu Kühlen oder getrennte Vorlaufleitungen vorzusehen, in denen jeweils ein Heizgerät und ein Kühlgerät vorgesehen sind.

Besonders nachteilig hat sich dabei herausgestellt, daß Kühleinrichtungen für das Temperiermedium erforderlich sind, die je nach erforderlicher Kühlleistung doch mit erheblichen Anschaffungskosten aber auch Wartungs- und Instandhaltungskosten verbunden sind. Es wurde daher auch schon versucht, den Kühlwasserbedarf aus einer Wasserleitung zu decken, was an sich sehr kostengünstig wäre, aber bislang daran gescheitert ist, daß sich bei den bisher verwendeten Techniken zur Taktsteuerung, d.h. dem Absperren der Leitungen vor und nach dem Formwerkzeug, keine zufriedenstellenden Druck- und Strömungs- bzw. Temperaturverhältnisse erzielen ließen.

Bei der vorliegenden Erfindung, bei der die Leitungen ausschließlich nach dem Formwerkzeug durch Ventile gesteuert abgesperrt werden, ergeben sich die erheblichen Vorteile, daß nicht nur ein einfacher Wasserleitungsanschluß für die Zufuhr des Kühlmediums herangezogen - auf eine Kühlvorrichtung somit verzichtet werden kann, sondern daß auch beim Öffnen und Schließen der Ventile äußerst konstante Druckverhältnisse - bedingt durch die offene Verbindung zur Wasserleitung - herrschen.

Da aber natürlich sowohl der Druck als auch die Temperatur der Ortswasserleitung schwanken können, ist es zum einen möglich, durch Ändern der Taktzeiten beim Temperieren im Herstellungszyklus auf die geänderten Bedingungen Rücksicht zu nehmen.

Bevorzugt ist bei der Erfindung allerdings, wenn der Druck in der Zulaufleitung in Abhängigkeit vom Anschlußdruck und/oder der Anschlußtemperatur des Wassers der Wasserleitung über ein Druckminderventil gesteuert wird.

Durch das Druckminderventil läßt sich zum einen der Druck in den Leitungen im Formwerkzeug steuern. Zum andern läßt sich mit dem Druckminderventil aber auch die Fördermenge von Wasser/Zeiteinheit durch das Formwerkzeug steuern, wodurch auch auf unterschiedliche Zulauftemperaturen des Wassers aus der Ortswasserleitung Rücksicht genommen werden kann, indem bei höheren Zulauftemperaturen die Fördermenge/Zeiteinheit erhöht wird.

Da einzelne Formplatten des Formwerkzeuges einen unterschiedlichen Kühlmittelbedarf haben können und dieser Kühlmittelbedarf unter anderem durch unterschiedliche Taktzeiten bei der Kühlung der einzelnen Formplatten berücksichtigt werden kann, ist in Weiterbildung der Erfindung vorgesehen, daß jeder Leitung im Formwerkzeug ein Ventil zugeordnet ist.

Auf diese Weise kann der Kühlmittelbedarf in jeder Leitung einer Formplatte des Formwerkzeuges individuell gesteuert bzw. getaktet werden.

Zu Beginn eines Produktionsprozesses ist es erforderlich, die Formwerkzeuge zunächst auf Betriebstemperatur zu erwärmen. Hierfür kann in der Zulaufleitung ein Durchlauferhitzer angeordnet sein. Um diesen Durchlauferhitzer möglichst klein ausführen zu können, kann in Weiterbildung der Erfindung vorgesehen sein, daß das Fördern von Temperiermedium während der Aufwärmphase intermittierend erfolgt.

Durch das Unterbrechen des Durchflusses des Temperiermediums durch den Durchlauferhitzer während der Aufwärmphase wird das Temperiermedium auf eine höhere Temperatur erhitzt, so daß auch das Formwerkzeug schneller erwärmt werden kann. Umgekehrt kann aber natürlich auch bei vorgegebener Aufwärmzeit, die z.B. durch die für das Plastifizieren des zu verarbeitenden Materials erforderlichen Zeit vorgegeben ist, der Durchlauferhitzer kleiner ausgeführt werden, als dies beim Stand der Technik bzw. ohne getakteten Betrieb des Durchlauferhitzer möglich wäre.

Weitere bevorzugte Ausgestaltungen der Erfindung sind Gegenstand der übrigen Unteransprüche.

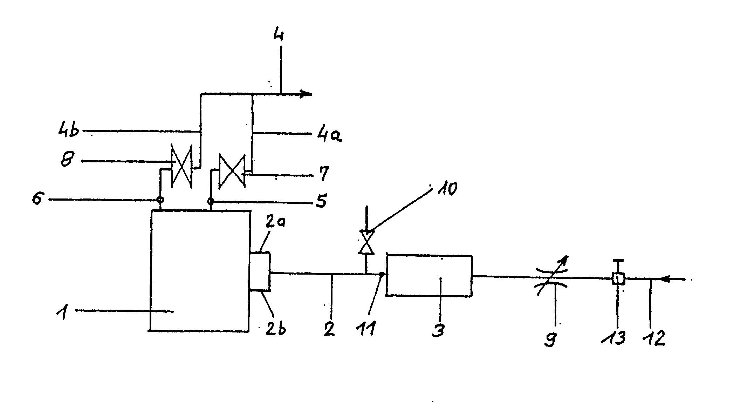

Ein bevorzugtes Ausführungsbeispiel der Erfindung wird mit Bezug auf die beiliegende Zeichnung in der Folge erläutert.

Wie in der Zeichnung grob schematisch dargestellt ist, führt zu einem Formwerkzeug 1 eine Zulaufleitung 2 mit einem Durchlauferhitzer 3. Die Zulaufleitung 2 gabelt sich im dargestellten Ausführungsbeispiel in zwei Leitungen 2a, 2b, die zu zwei in der Zeichnung nicht gesondert dargestellten Formplatten des Formwerkzeuges 1 führen. Vom Formwerkzeug 1 führt eine Ablaufleitung 4 weg, in die wiederum zwei Leitungen 4a, 4b der Formplatten des Formwerkzeuges 1 zusammengeführt sind. In Strömungsrichtung nach den Formplatten des Formwerkzeuges 1 sind zwei Temperaturfühler 5, 6 angeordnet, mit denen die Temperatur des Temperiermediums überwacht und allfällige Abweichungen von Sollwerten in der Steuerung berücksichtigt werden.

In den Ableitungen 4a, 4b sind des weiteren steuerbare Absperrventile 7 und 8 vorgesehen, mit denen der Durchfluß von Temperiermedium durch die Leitungen 2a, 2b bzw. 4a, 4b im Formwerkzeug 1 unabhängig voneinander unterbrochen werden kann.

In der Zulaufleitung 2 ist des weiteren ein steuerbares Druckminderventil 9 angeordnet. Schließlich ist noch ein Überdruckventil 10 an die Zulaufleitung 2 angeschlossen.

Die Zulaufleitung 2 ist an eine Ortswasserleitung 12 angeschlossen, was beispielhaft durch das Ventil 13 dargestellt ist.

Zu Beginn eines Fertigungsprozesses muß zunächst das Formwerkzeug 1 auf Betriebstemperatur erwärmt werden, wozu der Durchlauferhitzer 3 eingeschaltet wird.

Die Ventile 7 und 8 sind geschlossen und das Ventil 13 ist geöffnet. Nachdem ein dem Durchlauferhitzer 3 zugeordneter Temperaturfühler 11 das Erreichen einer vorgegebenen Temperatur anzeigt, werden die Ventile 7 und 8 geöffnet, bis die Leitungen im Formwerkzeug 1 mit dem erwärmten Wasser gefüllt sind. Anschließend werden die Ventile 7 und 8 wieder geschlossen, worauf das Wasser im Formwerkzeug 1 seine Wärme an das Formwerkzeug 1 abgibt und im Durchlauferhitzer 3 neuerlich Wasser erwärmt wird. Nachdem dieses wieder die vorgegebene Temperatur erreicht hat, werden die Ventile 7 und 8 wieder geöffnet, bis sich das Formwerkzeug 1 wieder mit erwärmtem Wasser gefüllt hat. Dieser Vorgang wird sooft wiederholt, bis die Temperaturfühler 5, 6 am ablaufseitigen Ende des Formwerkzeuges 1 eine Temperatur anzeigen, welche auf eine ausreichende Erwärmung des Formwerkzeuges 1 hinweist.

Der Durchlauferhitzer 3 wird nun abgeschaltet und der Herstellungsprozeß wird nun mit einem ersten Zyklus begonnen, in welchem bereits Kaltwasser über die Zulaufleitung 2 in das Formwerkzeug 1 zugeführt wird. Abhängig von den besonderen Erfordernissen, die von der Art des herzustellenden Spritzgußteiles abhängen, werden die Ventile 7 und 8 z.B. während des Einspritzvorganges von Herstellungsmaterial in das Formwerkzeug 1 geschlossen, wobei der Wasserdruck durch die offene Verbindung zur Wasserleitung 12 konstant bleibt. Nach einer bestimmten Zeit, die ebenfalls wieder von der Art des herzustellenden Produktes abhängt, werden die Ventile 7 und 8 geöffnet und Kühlwasser durchströmt das Formwerkzeug 1, bis die Form bzw. der Spritzgußteil ausreichend abgekühlt ist, und dieser aus dem Formwerkzeug ausgestoßen wird, worauf ein neuer Herstellungszyklus beginnt.

In der Regel wird der beim ersten Zyklus hergestellte Spritzgußteil nicht die erforderliche Qualität aufweisen. Durch die hervorragende Kühlung des Formwerkzeuges 1 durch die Maßnahmen der vorliegenden Erfindung wird häufig aber bereits der zweite Zyklus akzeptable Spritzgußteile liefern.

Da sowohl der Anschlußdruck der Wasserleitung 12 als auch die Temperatur des Wassers Schwankungen unterliegen kann, ist in der Zulaufleitung 12 ein einstellbares Druckminderventil 9 vorgesehen, durch welches der Druck und in der Folge auch die Fördermenge je Zeiteinheit den jeweiligen Gegebenheiten und Erfordernissen angepaßt werden können.

Ob die eingestellten Taktzeiten der Ventile 7 und 8 sowie die Einstellung des Druckminderventiles 9 den jeweiligen Erfordernissen entsprechen, wird mittels der Temperaturfühler 5 und 6 überprüft, wobei Abweichungen von vorgegebenen Sollwerten durch eine Änderung der Taktzeiten der Ventile 7, 8, bevorzugt aber durch eine Änderung der Einstellung des Druckmindeventiles 9 berücksichtigt werden können.

Bei der Herstellung von CD-Rohlingen kann der Kühlzyklus mit dem Einspritzzyklus beispielhaft wie folgt synchronisiert sein.

Von der Spritzgußmaschine kommt ein START-Signal (das je nach Spritzgußmaschine entweder dem Signal "Werkzeug schließen" oder "Werkzeug öffnen" entspricht) worauf die Ventile 7, 8 geschlossen werden. Während das Herstellungsmaterial in das Formwerkzeug 1 eingespritzt wird, bleiben die Ventile 7, 8 während einer voreingestellten Verzögerungszeit geschlossen. Diese Verzögerungszeit hängt vornehmlich von der Art des herzustellenden Spritzgußteiles und dessen Werkstoff ab, zusätzlich aber auch von der Zulauftemperatur des Wassers und vom Wasserdruck. Nach Ablauf der Verzögerungszeit, die bei einem CD-Rohling beispielsweise für das Ventil 7 2,2 s und das Ventil 8 2 s betragen kann, werden die Ventile 7, 8 wieder geöffnet und das Formwerkzeug 1 wird von Kühlwasser durchströmt. Beim Einstellen der Verzögerungszeit ist im Hinblick auf den Zulaufdruck und die Zulauftemperatur des Kühlwassers darauf zu achten, daß die verbleibende Zeit nach dem Öffnen der Ventile ausreichend ist, daß bei gegebener Zulauftemperatur und der am Druckminderventil 9 eingestellten Fördermenge/Zeiteinheit für eine ausreichende Kühlung des Formwerkzeuges 1 gesorgt ist, gleichzeitig aber auch ein präzises Abformen des CD-Rohlings im Formhohlraum gewährleistet ist.

Die Ventile 7, 8 bleiben dann z.B. 1,4 bzw. 1,6 s geöffnet, bis von der Spritzgußmaschine wieder das START-Signal kommt und die Ventile 7,8 wieder geschlossen werden. Bei der Herstellung von CD-Rohlingen beträgt die Zykluszeit im beschriebenen Beispiel daher insgesamt 3,6 s.

## Patentansprüche

1. Verfahren zum Temperieren von Formwerkzeugen (1) von Spritzgußmaschinen, bei dem Temperiermedium von einer Zulaufleitung (2) kommend durch Leitungen (2a, 2b, 4a, 4b) im Formwerkzeug (1) strömt und durch eine Ablaufleitung (4) abgeführt wird, und bei dem der Durchfluß des Temperiermediums mittels Ventilen (7, 8) gesteuert wird, **dadurch gekennzeichnet, daß** der Durchfluß des Temperiermediums ausschließlich durch Öffnen und Schließen von in Strömungsrichtung gesehen nach dem Formwerkzeug (1) angeordneten Ventilen (7, 8) getaktet wird.

2. Verfahren nach Anspruch 1, **dadurch gekennzeichnet, daß** der Durchfluß von Wasser durch jede Leitung (2a, 4a; 2b, 4b) des Formwerkzeuges (1) gesondert getaktet wird.

3. Verfahren nach Anspruch 1 oder 2, **dadurch gekennzeichnet, daß** die Ablauf temperatur jeder Leitung (4a, 4b) des Formwerkzeuges (1) erfaßt wird.

4. Verfahren nach einem der Ansprüche 1 bis 3, **dadurch gekennzeichnet, daß** das Temperiermedium Wasser ist, das der Zulaufleitung (2) aus einer Wasserleitung (12) zugeführt wird.

5. Verfahren nach Anspruch 4, **dadurch gekennzeichnet, daß** der Druck in der Zulaufleitung (2) in Abhängigkeit vom Anschlußdruck und/oder der Anschlußtemperatur des Wassers der Wasserleitung (12) über ein Druckminderventil (9) gesteuert wird.

6. Verfahren nach einem der Ansprüche 1 bis 5, **dadurch gekennzeichnet, daß** das Temperiermedium in der Zulaufleitung (2) bei Bedarf, vorzugsweise während der Aufwärmphase vor Produktionsbeginn, mit einem Durchlauferhitzer (3) erwärmt wird.

7. Verfahren nach Anspruch 6, **dadurch gekennzeichnet, daß** das Fördern von Temperiermedium während der Aufwärmphase intermittierend erfolgt.

8. Verfahren zum Temperieren von Formwerkzeugen (1) von spritzgußmaschinen zur CD-Herstellung nach einem der Ansprüche 1 bis 7, **dadurch gekennzeichnet, daß** die Ventile (7, 8) nach Erhalt eines Startsignales von der Spritzgußmaschine geschlossen werden und nach einer einstellbaren Verzögerungszeit wieder geöffnet werden.

9. Vorrichtung zum Steuern des Temperierens von Formwerkzeugen (1) einer Spritzgußmaschine mit einer Zulaufleitung (2), Leitungen (2a, 2b, 4a, 4b) im Formwerkzeug (1) und einer Ablaufleitung (4), sowie Ventilen (7, 8) zum Steuern des Durchflusses von Temperiermedium durch das Formwerkzeug (1), **dadurch gekennzeichnet, daß** ausschließlich in Strömungsrichtung nach den Leitungen (2a, 2b, 4a, 4b) im Formwerkzeug (1) Ventile (7, 8) zum Takten des Druchflusses vorgesehen sind.

10. Vorrichtung nach Anspruch 9, **dadurch gekennzeichnet, daß** die Zulaufleitung (2) an eine Wasserleitung (12) angeschlossen ist und in der Zulaufleitung (2) ein Druckminderventil (9) angeordnet ist.

11. Vorrichtung nach Anspruch 9 oder 10, **dadurch gekennzeichnet, daß** jeder Leitung (4a, 4b) im Formwerkzeug ein Ventil (7, 8) zugeordnet ist.

12. Vorrichtung nach einem der Ansprüche 9 bis 11, **dadurch gekennzeichnet, daß** in der Zulaufleitung (2) ein Durchlauferhitzer (3) angeordnet ist.

13. Vorrichtung nach Anspruch 12, **dadurch gekennzeichnet, daß** dem Durchlauferhitzer (3) ein Temperaturfühler (11) zugeordnet ist.

14. Vorrichtung nach einem der Ansprüche 9 bis 13, **dadurch gekennzeichnet, daß** in den Leitungen (4a, 4b) in oder nach dem Formwerkzeug (1) Temperaturfühler (5, 6) vorgesehen sind.

15. Vorrichtung zum Herstellen von CD-Rohlingen nach einem der Ansprüche 9 bis 14, **dadurch gekennzeichnet, daß** sie ein einstellbares, Zeitverzögerungsglied aufweist, das die Schließzeit der Ventile (7, 8) steuert.

## Claims

1. Process for regulating the temperature of form tools (1) of injection moulding machines, in which temperature-regulating medium coming from a feed duct (2) flows through ducts (2a, 2b, 4a, 4b) in the form tool (1) and is discharged through a discharge duct (4), and in which the flow of the temperature-regulating medium is controlled by means of valves (7, 8), **characterised in that** the flow of the temperature-regulating medium is sequenced exclusively by opening and closing valves (7, 8) disposed downstream of the form tool (1), as viewed in the direction of flow.

2. Process according to Claim 1, **characterised in that** the flow of water through each duct (2a, 4a; 2b, 4b) of the form tool (1) is sequenced separately.

3. Process according to Claim 1 or 2, **characterised in that** the discharge temperature of each duct (4a, 4b) of the form tool (1) is detected.

4. Process according to one of Claims 1 to 3, **characterised in that** the temperature-regulating medium is water, which is supplied to the feed duct (1) from a water pipe (12).

5. Process according to Claim 4, **characterised in that** the pressure in the feed duct (2) is controlled via a pressure reducing valve (9) in dependence on the connection pressure and/or connection temperature of the water of the water pipe (12).

6. Process according to one of Claims 1 to 5, **characterised in that** the temperature-regulating medium in the feed duct (2) is heated where required by a flow heater (3), preferably during the warm-up phase before production begins.

7. Process according to Claim 6, **characterised in that** the transport of temperature-regulating medium is conducted intermittently during the warm-up phase.

8. Process for regulating the temperature of form tools (1) of injection moulding machines for CD production according to one of Claims 1 to 7, **characterised in that** the valves (7, 8) are closed after a start signal has been received from the injection moulding machine and are opened again after an adjustable delay period.

9. Device for controlling the temperature regulation of form tools (1) of an injection moulding machine with a feed duct (2), ducts (2a, 2b, 4a, 4b) in the form tool (1) and a discharge duct (4), as well as valves (7, 8) for controlling the flow of temperature-regulating medium through the form tool (1), **characterised in that** valves (7, 8) for sequencing the flow are provided exclusively downstream of the ducts (2a, 2b, 4a, 4b) in the form tool (1) in the direction of flow.

10. Device according to Claim 9, **characterised in that** the feed duct (2) is connected to a water pipe (12) and a pressure reducing valve (9) is disposed in the feed duct (2).

11. Device according to Claim 9 or 10, **characterised in that** each duct (4a, 4b) in the form tool has an associated valve (7, 8).

12. Device according to one of Claims 9 to 12, **characterised in that** a flow heater (3) is disposed in the feed duct (2).

13. Device according to Claim 12, **characterised in that** the flow heater (3) has an associated temperature sensor (11).

14. Device according to one of Claims 9 to 13, **characterised in that** temperature sensors (5, 6) are provided in the ducts (4a, 4b) in or downstream of the form tool (1).

15. Device for the production of CD blanks according to one of Claims 9 to 14, **characterised in that** it has an adjustable time delay element, which controls the closing time of the valves (7, 8).

## Revendications

1. Procédé pour l'équilibrage de la température d'outils de moulage (1) de machine de moulage-injection, dans lequel un fluide d'équilibrage de température provenant d'une conduite d'entrée (2) circule dans des conduites (2a, 2b, 4a, 4b) à l'intérieur de l'outil de moulage (1) et est évacué à travers une conduite de sortie (4), et dans lequel le débit de fluide d'équilibrage de température est contrôlé au moyen de vannes (7, 8), **caractérisé en ce que** le débit de fluide d'équilibrage de température est cadencé exclusivement par ouverture et fermeture de vannes (7, 8) disposées en aval de l'outil de moulage (1), vu dans la direction d'écoulement.

2. Procédé selon la revendication 1, **caractérisé en ce que** le débit d'eau est cadencé séparément dans chacune des conduites (2a, 4a; 2b,4b).

3. Procédé selon la revendication 1 ou 2, **caractérisé en ce qu'**on mesure la température de sortie de chaque conduite (4a,4b) de l'outil de moulage.

4. Procédé selon une des revendications 1 à 3, **caractérisé en ce que** le fluide d'équilibrage de température est de l'eau qui est amenée à la conduite d'entrée (2) à partir d'une conduite d'eau (12).

5. Procédé selon la revendication 4, **caractérisé en ce que** la pression dans la conduite d'entrée (2) est contrôlée au moyen d'une soupape de limitation de pression (9), en fonction de la pression et/ou de la température de l'eau de la conduite d'eau (12).

6. Procédé selon une des revendications 1 à 5, **caractérisé en ce que** le fluide d'équilibrage de température dans la conduite d'entrée (2), en cas de besoin, de préférence pendant la phase de chauffage avant le début de la production, est chauffé au moyen d'un réchauffeur instantané (3).

7. Procédé selon la revendication 6, **caractérisé en ce que** la circulation de fluide d'équilibrage de température pendant la phase de chauffage est intermittente.

8. Procédé pour l'équilibrage de la température d'outils de moulage (1) de machines de moulage-injection pour la fabrication de CD, selon une des revendications 1 à 7, **caractérisé en ce que** les vannes (7, 8) après réception d'un signal de démarrage de la machine de moulage-injection sont fermées, puis sont rouvertes après une durée de temporisation réglable.

9. Dispositif de contrôle de l'équilibrage de température d'outils de moulage (1) d'une machine de moulage-injection comportant une conduite d'entrée (2), des conduites (2a, 2b, 4a, 4b) à l'intérieur de l'outil de moulage (1) et une conduite de sortie (4), ainsi que des vannes (7, 8) pour contrôler le débit de fluide d'équilibrage de température dans l'outil de moulage (1), **caractérisé en ce qu'**il est prévu des vannes (7, 8) uniquement en aval des conduites (2a, 2b, 4a, 4b) dans l'outil de moulage (1), vu dans la direction d'écoulement pour cadencer le débit.

10. Dispositif selon la revendication 9, **caractérisé en ce que** la conduite d'entrée (2) est raccordée à une conduite d'eau (12) et **en ce qu'**une soupape de limitation de pression (9) est disposée dans la conduite d'entrée (2).

11. Dispositif selon la revendication 9 ou 10, **caractérisé en ce qu'**une vanne (7, 8) est associée à chaque conduite (4a, 4b) dans l'outil de moulage (1).

12. Dispositif selon une des revendications 9 à 11, **caractérisé en ce qu'**un réchauffeur instantané (3) est disposé dans la conduite d'entrée (2).

13. Dispositif selon la revendication 12, **caractérisé en ce qu'**une sonde de température (11) est associée au réchauffeur instantané (3).

14. Dispositif selon une des revendications 9 à 13, **caractérisé en ce que** des sondes de température (5, 6) sont prévues dans les conduites (4a, 4b) à l'intérieur et en aval de l'outil de moulage (1).

15. Dispositif pour la fabrication d'ébauches de CD selon une de revendications 9 à 14, **caractérisé en ce qu'**il comporte un organe de temporisation réglable, qui contrôle la durée de fermeture des vannes (7, 8).
